(19) <img>Europäisches Patentamt / European Patent Office / Office européen des brevets</img>

(11) **EP 4 084 166 B1**

(12) # EUROPEAN PATENT SPECIFICATION

(45) Date of publication and mention
of the grant of the patent:
**01.05.2024 Bulletin 2024/18**

(21) Application number: **20911675.5**

(22) Date of filing: **25.12.2020**

(51) International Patent Classification (IPC):
*H01M 8/04746* (2016.01)   *H01M 8/04992* (2016.01)
*B60L 58/30* (2019.01)   *H01M 8/0438* (2016.01)

(52) Cooperative Patent Classification (CPC):
**B60L 58/30; H01M 8/04388; H01M 8/04753;
H01M 8/04992;** B60L 2260/44; H01M 2250/20;
Y02E 60/50; Y02T 90/40

(86) International application number:
**PCT/CN2020/139201**

(87) International publication number:
**WO 2021/139539 (15.07.2021 Gazette 2021/28)**

(54) **CONTROL METHOD AND APPARATUS FOR VEHICLE-MOUNTED HYDROGEN SYSTEM, AND
VEHICLE-MOUNTED HYDROGEN SYSTEM**

STEUERUNGSVERFAHREN UND -VORRICHTUNG FÜR FAHRZEUGMONTIERTES
WASSERSTOFFSYSTEM UND FAHRZEUGMONTIERTES WASSERSTOFFSYSTEM

PROCÉDÉ ET APPAREIL DE COMMANDE DE SYSTÈME À HYDROGÈNE EMBARQUÉ, ET
SYSTÈME À HYDROGÈNE EMBARQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.01.2020 CN 202010027049**

(43) Date of publication of application:
**02.11.2022 Bulletin 2022/44**

(73) Proprietor: **Yutong Bus Co., Ltd.**
**Zhengzhou, Henan 450061 (CN)**

(72) Inventors:
• **LI, He**
**Zhengzhou, Henan 450061 (CN)**
• **ZHANG, Tao**
**Zhengzhou, Henan 450061 (CN)**
• **ZHANG, Longhai**
**Zhengzhou, Henan 450061 (CN)**

• **JIANG, Shangfeng**
**Zhengzhou, Henan 450061 (CN)**
• **SI, Yaohui**
**Zhengzhou, Henan 450061 (CN)**
• **LI, Weiguo**
**Zhengzhou, Henan 450061 (CN)**

(74) Representative: **Gulde & Partner**
**Patent- und Rechtsanwaltskanzlei mbB**
**Wallstraße 58/59**
**10179 Berlin (DE)**

(56) References cited:
**CN-A- 106 299 401       CN-A- 109 792 065
CN-A- 110 010 931       CN-A- 110 112 442
CN-A- 111 244 507       US-A1- 2018 309 144
US-A1- 2019 074 529**

## Description

### FIELD OF THE INVENTION

The present invention belongs to the field of fuel cell vehicles of new energy vehicles, in particularly, relates to a control method and apparatus for a vehicle-mounted hydrogen system, and a vehicle-mounted hydrogen system.

### BACKGROUND OF THE INVENTION

The vehicle-mounted hydrogen system is used as the fuel supply assembly of the fuel cell system. Its main function is to reduce the 35MPa high-pressure hydrogen in the high-pressure hydrogen storage tank to the low-pressure hydrogen below 1MPa through the pressure regulating valve to meet the gas flow and pressure required for chemical reactions inside the fuel cell system. However, the working conditions of fuel cell vehicles are constantly changing. The output power of the fuel cell system changes with the working conditions of the whole vehicle, so that the required amount of hydrogen changes accordingly. Especially in the case of climbing, rapid acceleration and other working conditions, the output power of the fuel cell system increases greatly, and the requirement for hydrogen increases sharply, resulting in large fluctuations in the pressure of low-pressure hydrogen. When the hydrogen flow or pressure at a certain moment cannot meet the needs of the fuel cell system, the fuel cell system will send an alarm message, affecting the normal operation of the fuel cell system and the vehicle.

Since the dynamic response time of the mechanical apparatus (pressure regulator) that controls the hydrogen flow and pressure is mostly in seconds, and the chemical reaction of hydrogen is in milliseconds, there is a mismatch in the time dimension between supply and requirement, and the adjustment of flow and pressure afterwards is a passive adjustment, which cannot meet the real-time requirement for hydrogen by the fuel cell system.

### SUMMARY OF THE INVENTION

The purpose of the present invention is to provide a control method and apparatus for a vehicle-mounted hydrogen system, which are used to solve the problem that the control method in the prior art cannot meet the requirement for hydrogen by the fuel cell system.

Based on the above purpose, the technical solution of a control method for a vehicle-mounted hydrogen system is as follows:

building a pressure prediction model of output gas of the vehicle-mounted hydrogen system, and determining a predicted pressure value used to control the output gas of the vehicle-mounted hydrogen system according to the pressure prediction model; calculating the difference between the predicted pressure value and a target pressure value to obtain a prediction error;

obtaining an actual pressure value of the output gas of the vehicle-mounted hydrogen system, calculating the difference between the actual pressure value and the target pressure value, and obtaining an actual error;

comparing the prediction error with the actual error, and when the prediction error is less than the actual error, using the pressure prediction model to output a predicted pressure value at a next moment, and using the predicted pressure value as a target pressure at the next moment to control the gas output of the vehicle-mounted hydrogen system.

Based on the above purpose, a technical solution of a control apparatus for a vehicle-mounted hydrogen system is as follows:

comprising a memory, a processor, and a computer program stored in the memory and running on the processor, and when the processor executes the program, the steps in the control method of the vehicle-mounted hydrogen system described above are implemented.

The beneficial effects of the above two technical solutions are that:

the control method and apparatus of the vehicle-mounted hydrogen system of the present invention can predict and adjust output hydrogen state to meet the requirements of the fuel cell system, that is, predict gas pressure output by the vehicle-mounted hydrogen system through a pressure prediction model, and obtain a predicted pressure value; obtain an actual pressure value corresponding to the predicted pressure value (referring to the corresponding time), compare and differentiate the predicted pressure value and the actual pressure value respectively with a set pressure, to obtain a prediction error and an actual error, and then compare the two errors, use the calculated predicted pressure value as a target pressure to control the output gas pressure by the vehicle-mounted hydrogen system when the prediction error is relatively small.

The present invention adjusts the pressure of the output gas of the vehicle-mounted hydrogen system in advance by pre-judging the change trend of the output gas pressure of the vehicle-mounted hydrogen system, so that the hydrogen supplied by the vehicle-mounted hydrogen system can meet the requirement of the fuel cell system. Compared with the passive adjustment of the output hydrogen pressure of the vehicle-mounted hydrogen system in the prior art, in the present invention the active adjustment is realized, so as to ensure the real-time supply of the hydrogen flow and pressure, thereby improving the real-time load changing capability of the fuel cell system, satisfying the frequent changes in working conditions of the vehicle, and solving the problems of lag in the release of hydrogen from the vehicle-mounted hydrogen system when the car is climbing, accelerating rapidly or in other working conditions. At the same time, the control method and apparatus of the vehicle-mounted hydrogen system of the present invention can avoid the problem of concentration polarization during electrochemical reaction process. The reason for the concentration polarization is that hydrogen mass transfer rate is lower than hydrogen electrochemical reaction rate, so the hydrogen pressure and flow required by the fuel cell can be guaranteed by the control method of the present invention.

In order to obtain the pressure prediction model, specifically, the steps of building the pressure prediction model comprise:

collecting, continuously, an actual pressure value of the output gas of the vehicle-mounted hydrogen system within a set time, and building an original data sequence according to the actual pressure value within the set time; building a grey prediction model by using the original data sequence, as a pressure prediction model of the output gas of the vehicle-mounted hydrogen system. The advance prediction function of the grey prediction model is used to predict a change trend of the pressure of the vehicle-mounted hydrogen system, and the obtained predicted pressure value can be used to compensate for the external disturbance and the uncertainty of the system. Due to the nonlinear, time-delayed and uncertain characteristics of the pressure change of the hydrogen system, the feedforward control and feedback control based on the grey prediction model can accurately control the pressure of the hydrogen system. The prediction result of the feedforward control is used to compensate and control the pressure in advance, which can solve the influence of the uncertain disturbance on the system.

In order to improve the prediction accuracy of the grey prediction model, further, the building of the pressure prediction model further comprises the following steps:

eliminating an earliest actual pressure value in the original data sequence, updating an actual pressure value newly collected to the original data sequence, and rebuilding the grey prediction model based on the updated original data sequence.

Further, when the prediction error is not less than the actual error, the target pressure value is used as the target pressure at the next moment, and the vehicle-mounted hydrogen system is controlled to output gas.

Based on the above purpose, a technical solution of a vehicle-mounted hydrogen system is as follows:

comprising a hydrogen storage tank and a pressure regulator arranged on a gas path output from the hydrogen storage tank, and also comprising the control device for controlling the pressure regulator, so that the pressure regulator adjusts the output gas pressure to the target pressure.

The beneficial effects of the above technical solutions are that:

the vehicle-mounted hydrogen system of the present invention can predict and adjust the output hydrogen state in real time to meet the requirements of the fuel cell system. The pressure of the output gas of the vehicle-mounted hydrogen system is adjusted in advance by pre-judging the change trend of the output pressure of the vehicle-mounted hydrogen system in advance, so that the hydrogen supplied by the vehicle-mounted hydrogen system can meet the requirement of the fuel cell system in real time. Compared with the passive adjustment of the output hydrogen pressure of the vehicle-mounted hydrogen system in the prior art, in the present invention, the active adjustment is realized, so as to ensure the real-time supply of the hydrogen flow and pressure, thereby improving the real-time load changing capability of the fuel cell system, satisfying the frequent changes in working conditions of the vehicle, and solving the problem of the lag in the release of hydrogen from the vehicle-mounted hydrogen system when the car is climbing, accelerating rapidly or in other working conditions. At the same time, the control method and apparatus of the vehicle-mounted hydrogen system of the present invention can avoid the problem of concentration polarization during the electrochemical reaction process.

In order to obtain the actual pressure value of hydrogen, further, the vehicle-mounted hydrogen system also comprises a pressure sensor for collecting the actual pressure value of the output gas of the vehicle-mounted hydrogen system in real time, and sending the collected data to the control apparatus.

## BRIEF DESCRIPTION OF THE DRAWINGS

Fig. 1 is a control method flow chart of a vehicle-mounted hydrogen system in a method embodiment of the present invention;
Fig. 2 is a control logic block diagram of a vehicle-mounted hydrogen system in a method embodiment of the present invention;
Fig. 3 is a schematic diagram of a vehicle-mounted hydrogen system according to an embodiment of the system of the present invention;

The symbols in the figure are explained as follows:

1, bracket; 2, hydrogen storage tank; 3, valve body; 4, pressure regulator.

## DETAILED DESCRIPTION OF THE EMBODIMENTS

The specific embodiments of the present invention will be further described below with reference to the accompanying drawings.

**Method Embodiment:**

In order to realize the real-time requirement for hydrogen by the fuel cell system, this embodiment proposes a method for controlling a vehicle-mounted hydrogen system to control a low pressure of output hydrogen/gas by the vehicle-mounted hydrogen system, which specifically comprises the following steps:

building a pressure prediction model for the output gas of the vehicle-mounted hydrogen system. Specifically, actual pressure values of the output gas of the vehicle-mounted hydrogen system are continuously collected within a set time (for example, n sampling times), and an original data sequence is built according to these actual pressure values, which is $x^{(0)} = \{x^{(0)}(1), x^{(0)}(2), ......, x^{(0)}(n)\}$, then based on the original data sequence to build a grey prediction model GM(1,1) (for the hydrogen system, called the grey system, with nonlinear characteristics, the grey prediction model has better control effect), and the original data sequence is accumulated to generate an accumulation sequence (i.e., a prediction data sequence): $X^{(1)} = [x^{(1)}(k), k = 1,2, ... , n]$, where

$$x^{(1)}(k) = \sum_{j=1}^{k} x^{(0)}(k)$$

, build a first-order differential equation for this accumulation sequence, the expression is

$$\frac{dX^{(1)}}{dt} = AX^{(1)} + B$$

, and find A, B according to the least squares method, to obtain the grey prediction model GM(1,1), and then use the grey prediction model GM(1,1) to predict a predicted pressure value at time n.

In this embodiment, an actual pressure value of the hydrogen output from the vehicle-mounted hydrogen system is collected in real time through a pressure sensor, an actual pressure value at time n is obtained, and differentiate the predicted pressure value and actual pressure value at time n respectively from a set pressure value (that is, a set target pressure value), that is, according to the difference between the predicted pressure value and the set pressure value, a prediction error is obtained, and according to the difference between the actual pressure value and the set pressure value, an actual error is obtained. In this embodiment, the set pressure value is determined according to a collected pedal opening value of the vehicle, and is used to reflect the pressure requirement of the fuel cell system for hydrogen. That is, a vehicle controller collects the accelerator pedal opening value of the vehicle, calculates fuel cell power requirement corresponding to accelerator pedal according to the corresponding relationship between the accelerator pedal opening value and the fuel cell system power, and then obtains the corresponding set pressure value under this power.

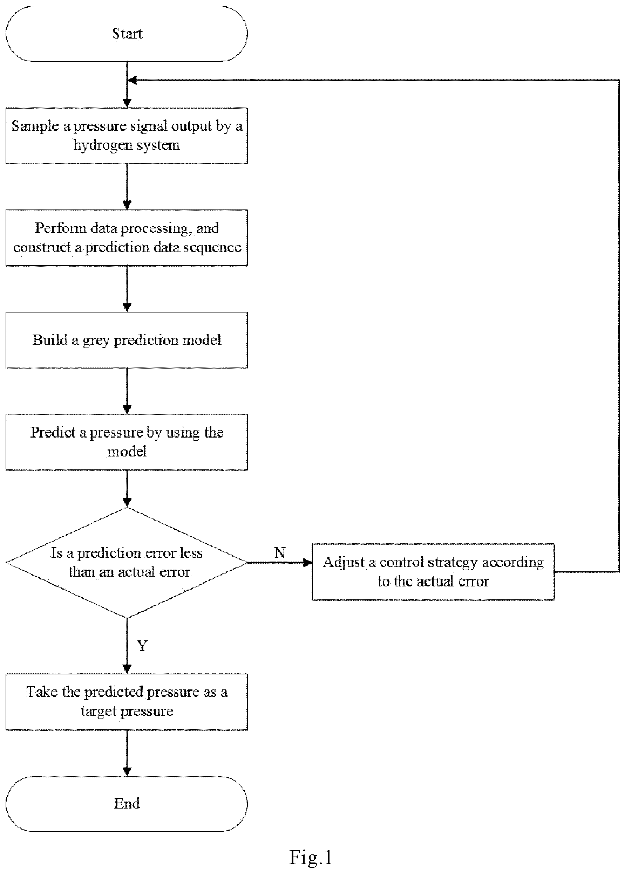

After obtaining the prediction error and the actual error at time n, compare the magnitude of the prediction error and the actual error. When the prediction error is less than the actual error, it means that the predicted pressure value at time n can better meet the need for hydrogen in the current fuel cell system. Therefore, the grey prediction model GM(1, 1) is used to output a predicted pressure value Pn+1' at time n+1 as a target pressure for controlling the gas output of the vehicle-mounted hydrogen system at time n+1, as shown in Fig. 1.

Then, update the grey prediction model, specifically:

eliminating an earliest data information in the original data sequence, such as $x^{(0)}(1)$, and adding an actual pressure value $x^{(0)}(n+1)$ of the hydrogen newly collected by the pressure sensor to the original data sequence to obtain an updated original data sequence $x^{(0)'} = \{x^{(0)}(2), x^{(0)}(3), ......, x^{(0)}(n+1)\}$, rebuilding the grey prediction model GM(1, 1) to predict a predicted pressure value at time n+1 based on the sequence $x^{(0)'}$, and then differentiating the actual pressure value and the predicted pressure value at time n+1 respectively from the set pressure value, and obtaining an actual error and a prediction error at time n+1; comparing the two errors, when the prediction error is small, using a predicted pressure value at time n+2 output by the grey prediction model GM(1,1) as a target pressure to control the hydrogen output pressure from the vehicle-mounted hydrogen system. Then, an earliest data in the previous original data sequence is removed, so as to realize the metabolism of the data for constructing the prediction model, update the grey prediction model, and make predictions one by one to realize the pressure control of the gas output of the vehicle-mounted hydrogen system at each moment.

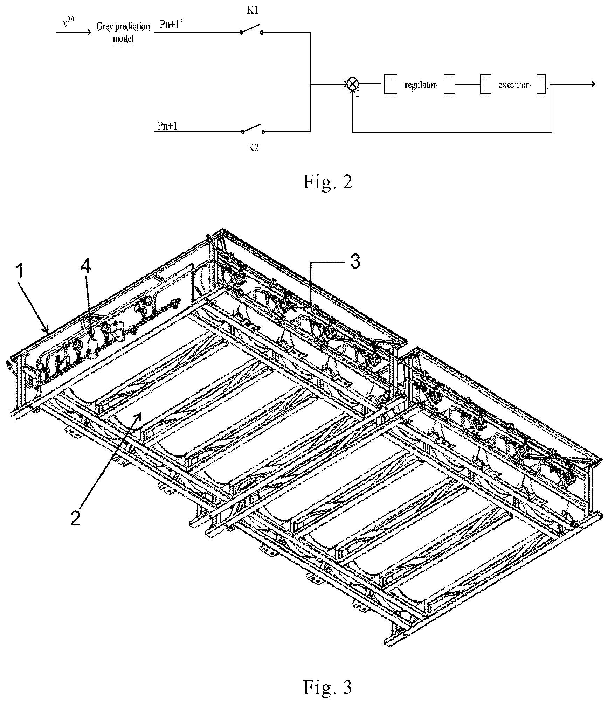

In this embodiment, both the actual error and the prediction error are deviations, and both are positive values; and, when the actual error and the prediction error at time n are compared, if the actual error is less than (or equal to) the prediction error, it indicates that the error of using the predicted pressure value as the target pressure is relatively large, so this predicted pressure value is not used, and the control strategy at the next moment is adjusted according to the actual error. The control principle is shown in Fig. 2. If the actual error is less than (or equal to) the prediction error, turn off the switch K1, close the switch K2, take a set pressure value Pn+1 as a target pressure at the next moment, and control the output gas of the vehicle-mounted hydrogen system instead of using the predicted pressure value Pn+1'. Then, the grey prediction model is still updated according to the above content, and the above content is repeated to determine a target pressure for controlling hydrogen at a next moment.

In addition, this embodiment is used to judge the relative small error by comparing an actual error and a prediction error at the last time (time n), as other embodiments, an actual error and a prediction error of several consecutive times can also be compared, for example, comparing actual errors and prediction errors at time n-2, n-1 and n, when the comparison results are that the prediction errors are all relative small, a predicted pressure value at time n+1 is used as a target pressure, so as to achieve the purpose of controlling the hydrogen pressure.

In this embodiment, the reason why the grey prediction model is used as the pressure prediction model is that the grey prediction model can regenerate the original data, the original data sequence (grey sequence) without regularity can be accumulated into a new sequence with strong regularity, and then the differential equation can be used to describe this new sequence, solve this differential equation to get the relationship between an input variable and an output variable. It should be noted that the process of solving the grey prediction model GM (1, 1) belongs to the prior art and does not need to be described in detail.

When the vehicle drives in the working conditions such as climbing, rapid acceleration, etc., due to the sharp increase in the requirement for hydrogen by the fuel cell system, it may be inaccurate to use a grey prediction model to predict the predicted pressure values at multiple times. Therefore, an embodiment of rebuilding a grey prediction model corresponding to a moment is adopted. As other embodiments, when it is judged that a prediction error is less than an actual error, predicted pressure values at time n+1 and several later times can also be predicted according to the grey prediction model $GM(1,1)$ built by the original data sequence $x^{(0)}$, as a target pressure for controlling the output hydrogen of the vehicle-mounted hydrogen system at a corresponding time, without the need to update the grey prediction model in real time, so as to reduce the calculation pressure of the system. In addition, this situation is suitable for the road conditions where the vehicle runs smoothly. Since the fuel cell system does not have high requirements on the hydrogen variation, that is, a predicted pressure value within a period of time can be accurately predicted by a pressure prediction model. Therefore, the grey prediction model in this embodiment can be updated and predicted according to a certain set time period.

The control method of the present invention adjusts the pressure of the output gas of the vehicle-mounted hydrogen system in advance by pre-judging the change trend of the output gas pressure of the vehicle-mounted hydrogen system, so that the hydrogen supplied by the vehicle-mounted hydrogen system can meet the requirement of the fuel cell system. Compared with the passive adjustment of the output hydrogen pressure of the vehicle-mounted hydrogen system in the prior art, in the present invention, the active adjustment is realized, so as to ensure the real-time supply of the hydrogen flow and pressure, thereby improving the real-time load changing capability of the fuel cell system, satisfying the frequent changes in working conditions of the vehicle, and solving the problems of lag in the release of hydrogen from the vehicle-mounted hydrogen system when the car is climbing, accelerating rapidly or in other working conditions. At the same time, the control method and apparatus of the vehicle-mounted hydrogen system of the present invention can avoid the problem of concentration polarization during electrochemical reaction process.

**Apparatus Embodiment:**

In order to control the low pressure of the hydrogen output by the vehicle-mounted hydrogen system, this embodiment proposes a control apparatus for the vehicle-mounted hydrogen system, including a memory, a processor, and a computer program stored in the memory and running on the processor, and the control method in the above method embodiment is implemented when the processor executes the program. As in the actual vehicle-mounted hydrogen system, the low pressure of the hydrogen output is controlled by a pressure regulator, therefore, the processor needs to send a control command of the target pressure to the pressure regulator, and the pressure regulator adjusts the low pressure of the hydrogen output according to the control command, so as to meet the hydrogen requirement of fuel cell system.

The control apparatus of the vehicle-mounted hydrogen system of the present invention can predict and adjust the output hydrogen state to meet the requirements of the fuel cell system, that is, predict a gas pressure output by the vehicle-mounted hydrogen system through a pressure prediction model, and obtain a predicted pressure value; obtain an actual pressure value corresponding to the predicted pressure value (referring to the corresponding time), compare and differentiate the predicted pressure value and the actual pressure value respectively with a set pressure value, and to obtain a prediction error and an actual error; and then comparing the two errors, when the prediction error is relatively small, the calculated predicted pressure value is used as the target pressure to control the gas pressure output by the vehicle-mounted hydrogen system.

In addition, the processor in this embodiment may be either a computer or a microprocessor, such as an ARM, etc., or a programmable chip, such as an FPGA, a DSP, and the like.

Since the steps executed in the above-mentioned processor are processes corresponding to the method procedures in the method embodiment, and the introduction of the above-mentioned method is sufficiently clear and complete, this embodiment will not describe in detail.

**System Embodiment:**

This embodiment applies the control method in the method embodiment to a vehicle-mounted hydrogen system. A vehicle-mounted hydrogen system (45-degree upward viewing angle) shown in Fig. 3, comprises a bracket 1 for placing a hydrogen storage tank 2, a valve body 3 for controlling the hydrogen gas circulating in the hydrogen storage tank 2 and a pressure regulator 4 for decompressing the hydrogen gas in the hydrogen storage tank 2.

The valve body 3 is arranged on a gas path output from the hydrogen storage tank 2, an output end of the valve body 3 is provided with a conversion interface. The pressure regulator 4 comprises a high-pressure inlet used to connect the conversion interface of the valve body 3, and the pressure regulator 4 is also provided with a low-pressure outlet connected to a cell stack in the fuel cell system, and one or several pressure reducing valves are installed on a pipeline connecting between a high-pressure inlet and the low-pressure outlet. The number of pressure reducing valves can be set according to requirements. The pressure reducing valve is a solenoid valve, and its control end is connected with a control apparatus in the apparatus embodiment, and through a processor in the control apparatus, the control method in the above method embodiment is implemented when program is executed to control the pressure reducing valve to realize the pressure regulation of hydrogen output by the vehicle-mounted hydrogen system.

In this embodiment, a pressure sensor is arranged at an outlet of the pressure reducing valve to collect a pressure data of the output hydrogen, so as to obtain an actual pressure value of the hydrogen output by the vehicle-mounted hydrogen system.

The vehicle-mounted hydrogen system shown in Fig. 3 is only a specific application system of the control method and apparatus of the present invention, and the control method and apparatus of the present invention are not limited to this. The control method and apparatus of the present invention are applicable to the existing other vehicle-mounted hydrogen systems in the prior art and will not be listed one by one.

Therefore, the above descriptions are only preferred embodiments of the present invention, and are not intended to limit the present invention. For those skilled in the art, the present invention may have various modifications and changes.

**Claims**

1. A control method for a vehicle-mounted hydrogen system, **characterized by** comprising the following steps:

   building a pressure prediction model of output gas of the vehicle-mounted hydrogen system, and determining a predicted pressure value used to control the output gas of the vehicle-mounted hydrogen system according to a pressure prediction model; calculating a difference between the predicted pressure value and a set target pressure value to obtain a prediction error; obtaining an actual pressure value of the output gas of the vehicle-mounted hydrogen system, calculating a difference between the actual pressure value and a target pressure value, and obtaining an actual error;
comparing the prediction error with the actual error, and when the prediction error is less than the actual error, using the pressure prediction model to output a predicted pressure value at a next moment, and using the predicted pressure value as a target pressure at the next moment to control the output gas of the vehicle-mounted hydrogen system.

2. The control method of the vehicle-mounted hydrogen system according to claim 1, **characterized in that**, the step of building the pressure prediction model comprises:
collecting, continuously, an actual pressure value of the output gas of the vehicle-mounted hydrogen system within a set time, and building an original data sequence according to the actual pressure value within the set time; building a grey prediction model as the pressure prediction model by using the original data sequence.

3. The control method of the vehicle-mounted hydrogen system according to claim 2, **characterized by** further comprising the following steps:
eliminating an earliest actual pressure value in the original data sequence, updating an actual pressure value newly collected to the original data sequence, and rebuilding a grey prediction model based on an updated original data sequence.

4. The control method of the vehicle-mounted hydrogen system according to claim 1, **characterized in that**, when the prediction error is not less than the actual error, the target pressure value is used as a target pressure at a next moment, and the vehicle-mounted hydrogen system is controlled to output gas.

5. A control apparatus for a vehicle-mounted hydrogen system, comprising a memory, a processor, and a computer program stored in the memory and running on the processor, **characterized in that** the processor implements the following steps when executing the program:

   building a pressure prediction model of output gas of the vehicle-mounted hydrogen system, and determining a predicted pressure value used to control the output gas of the vehicle-mounted hydrogen system according to the pressure prediction model; calculating a difference between the predicted pressure value and a target pressure value to obtain a prediction error;
obtaining an actual pressure value of the output gas of the vehicle-mounted hydrogen system, calculating a difference between the actual pressure value and the target pressure value, and obtaining an actual error;

comparing the prediction error with the actual error, and when the prediction error is less than the actual error, using the pressure prediction model to output a predicted pressure value at a next moment, and using the predicted pressure value as the target pressure at the next moment to control the vehicle-mounted hydrogen system to output gas.

6. The control apparatus for a vehicle-mounted hydrogen system according to claim 5, **characterized in that** the processor is further configured to implement the following steps when executing the program: collecting, continuously, an actual pressure value of the output gas of the vehicle-mounted hydrogen system within a set time, and building an original data sequence according to the actual pressure value within the set time; building a grey prediction model by using the original data sequence, as the pressure prediction model of the output gas of the vehicle-mounted hydrogen system.

7. The control apparatus for a vehicle-mounted hydrogen system according to claim 6, **characterized in that** the processor is further configured to implement the following steps when executing the program: eliminating an earliest actual pressure value in the original data sequence, updating a newly collected actual pressure value to the original data sequence, and rebuilding a grey prediction model based on an updated original data sequence.

8. The control apparatus for a vehicle-mounted hydrogen system according to claim 5, **characterized in that** the processor is further configured to implement the following steps when executing the program: when the prediction error is not less than the actual error, the target pressure value is used as a target pressure at a next moment, and the vehicle-mounted hydrogen system is controlled to output gas.

9. A vehicle-mounted hydrogen system, comprising a hydrogen storage tank and a pressure regulator, the pressure regulator being arranged on a gas path output from the hydrogen storage tank, **characterized in that** the system further comprises the control apparatus according to any one of claims 5-8, the control apparatus is used to control the pressure regulator, so that the pressure regulator adjusts the output gas pressure to the target pressure.

10. The vehicle-mounted hydrogen system according to claim 9, **characterized by** further comprising a pressure sensor for collecting an actual pressure value of the output gas of the vehicle-mounted hydrogen system in real time, and sending the collected data to the control apparatus.

**Patentansprüche**

1. Regelverfahren für ein fahrzeugmontiertes Wasserstoffsystem, **gekennzeichnet dadurch, dass** es die folgenden Schritte umfasst:

Erstellen eines Druckvorhersagemodells des aus dem fahrzeugmontierten Wasserstoffsystem abgegebenen Gases und Bestimmen eines vorhergesagten Druckwerts, der zum Regeln des aus dem fahrzeugmontierten Wasserstoffsystem abgegebenen Gases gemäß einem Druckvorhersagemodell verwendet wird; Berechnen einer Differenz zwischen dem vorhergesagten Druckwert und einem festgelegten Zieldruckwert, um einen Vorhersagefehler zu erhalten;
Erhalten eines aktuellen Druckwerts des aus dem fahrzeugmontierten Wasserstoffsystem abgegebenen Gases, Berechnen einer Differenz zwischen dem aktuellen Druckwert und einem Zieldruckwert und Erhalten eines aktuellen Fehlers;
Vergleichen des Vorhersagefehlers mit dem aktuellen Fehler, und wenn der Vorhersagefehler kleiner als der aktuelle Fehler ist, Verwenden des Druckvorhersagemodells zum Ausgeben eines vorhergesagten Druckwerts zu einem nächsten Moment und Verwenden des vorhergesagten Druckwerts als einen Zieldruck zum nächsten Moment, um das aus dem fahrzeugmontierten Wasserstoffsystem abgegebene Gas zu regeln.

2. Regelverfahren des fahrzeugmontierten Wasserstoffsystems nach Anspruch 1, **dadurch gekennzeichnet, dass** der Schritt des Erstellens des Druckvorhersagemodells Folgendes umfasst:

Sammeln, auf kontinuierliche Weise, eines aktuellen Druckwerts des aus dem fahrzeugmontierten Wasserstoffsystem abgegebenen Gases innerhalb einer festgelegten Zeit und Erstellen einer ursprünglichen Datenfolge gemäß dem aktuellen Druckwert innerhalb der festgelegten Zeit;
Erstellen eines grauen Vorhersagemodells als das Druckvorhersagemodell durch Verwenden der ursprünglichen Datenfolge.

3. Regelverfahren des fahrzeugmontierten Wasserstoffsystems nach Anspruch 2, **gekennzeichnet dadurch, dass** es ferner die folgenden Schritte umfasst:
Beseitigen eines frühesten aktuellen Druckwerts in der ursprünglichen Datenfolge, Aktualisieren der ursprünglichen Datenfolge durch einen neu erfassten aktuellen Druckwert, und Neuerstellen eines grauen Vorhersagemodells basierend auf einer aktualisierten ursprünglichen Datenfolge.

4. Regelverfahren des fahrzeugmontierten Wasserstoffsystems nach Anspruch 1, **dadurch gekennzeichnet, dass**, wenn der Vorhersagefehler nicht kleiner als der aktuelle Fehler ist, der Zieldruckwert als ein Zieldruckwert zum nächsten Moment verwendet wird und das fahrzeugmontierte Wasserstoffsystem geregelt wird, um Gas abzugeben.

5. Regeleinrichtung für ein fahrzeugmontiertes Wasserstoffsystem, umfassend einen Speicher, einen Prozessor und ein Computerprogramm, das in dem Speicher gespeichert ist und auf dem Prozessor läuft, **dadurch gekennzeichnet, dass** der Prozessor die folgenden Schritte implementiert, wenn er das Programm ausführt:

   Erstellen eines Druckvorhersagemodells des aus dem fahrzeugmontierten Wasserstoffsystem abgegebenen Gases und Bestimmen eines vorhergesagten Druckwerts, der zum Regeln des aus dem fahrzeugmontierten Wasserstoffsystem abgegebenen Gases gemäß dem Druckvorhersagemodell verwendet wird; Berechnen einer Differenz zwischen dem vorhergesagten Druckwert und einem Zieldruckwert, um einen Vorhersagefehler zu erhalten; Erhalten eines aktuellen Druckwerts des aus dem fahrzeugmontierten Wasserstoffsystem abgegebenen Gases, Berechnen einer Differenz zwischen dem aktuellen Druckwert und dem Zieldruckwert und Erhalten eines aktuellen Fehlers; Vergleichen des Vorhersagefehlers mit dem aktuellen Fehler, und wenn der Vorhersagefehler kleiner als der aktuelle Fehler ist, Verwenden des Druckvorhersagemodells zum Ausgeben eines vorhergesagten Druckwerts zu einem nächsten Moment, und Verwenden des vorhergesagten Druckwerts als den Zieldruck zum nächsten Moment, um das fahrzeugmontierte Wasserstoffsystem zu regeln, um Gas abzugeben.

6. Regeleinrichtung für ein fahrzeugmontiertes Wasserstoffsystem nach Anspruch 5, **dadurch gekennzeichnet, dass** der Prozessor ferner dazu ausgestaltet ist, die folgenden Schritte zu implementieren, wenn er das Programm ausführt: Sammeln, auf kontinuierliche Weise, eines aktuellen Druckwerts des aus dem fahrzeugmontierten Wasserstoffsystem abgegebenen Gases innerhalb einer festgelegten Zeit und Erstellen einer ursprünglichen Datenfolge gemäß dem aktuellen Druckwert innerhalb der festgelegten Zeit; Erstellen eines grauen Vorhersagemodells durch Verwenden der ursprünglichen Datenfolge als das Druckvorhersagemodell des aus dem fahrzeugmontierten Wasserstoffsystem abgegebenen Gases.

7. Regeleinrichtung für ein fahrzeugmontiertes Wasserstoffsystem nach Anspruch 6, **dadurch gekennzeichnet, dass** der Prozessor ferner dazu ausgestaltet ist, die folgenden Schritte zu implementieren, wenn er das Programm ausführt:
Beseitigen eines frühesten aktuellen Druckwerts in der ursprünglichen Datenfolge, Aktualisieren der ursprünglichen Datenfolge durch einen neu erfassten aktuellen Druckwert, und Neuerstellen eines grauen Vorhersagemodells basierend auf einer aktualisierten ursprünglichen Datenfolge.

8. Regeleinrichtung für ein fahrzeugmontiertes Wasserstoffsystem nach Anspruch 5, **dadurch gekennzeichnet, dass** der Prozessor ferner dazu ausgestaltet ist, die folgenden Schritte zu implementieren, wenn er das Programm ausführt: wenn der Vorhersagefehler nicht kleiner als der aktuelle Fehler ist, wird der Zieldruckwert als ein Zieldruck zum nächsten Moment verwendet und das fahrzeugmontierte Wasserstoffsystem wird geregelt, um Gas abzugeben.

9. Fahrzeugmontiertes Wasserstoffsystem, umfassend einen Wasserstofftank und einen Druckregler, wobei der Druckregler auf einem Gaspfad, der von dem Wasserstofftank ausgeht, angeordnet ist, **dadurch gekennzeichnet, dass** das System ferner die Regeleinrichtung nach einem der Ansprüche 5-8 umfasst, wobei die Regeleinrichtung zum Regeln des Druckreglers verwendet wird, sodass der Druckregler den Druck des abgegebenen Gases an den Zieldruck anpasst.

10. Fahrzeugmontiertes Wasserstoffsystem nach Anspruch 9, **gekennzeichnet dadurch, dass** es ferner einen Drucksensor zum Sammeln eines aktuellen Druckwerts des aus dem fahrzeugmontierten Wasserstoffsystem abgegebenen Gases in Echtzeit umfasst und die erfassten Daten an die Regeleinrichtung sendet.

## Revendications

1. Procédé de commande d'un système à hydrogène monté sur véhicule, **caractérisé en ce qu'**il comprend les étapes suivantes :

   l'élaboration d'un modèle de prédiction de la pression du gaz de sortie du système à hydrogène monté sur véhicule, et la détermination d'une valeur de pression prédite utilisée pour commander le gaz de sortie du système à hydrogène monté sur véhicule selon un modèle de prédiction de la pression ; le calcul d'une différence entre la valeur de pression prédite et une valeur de pression cible définie afin d'obtenir une erreur de prédiction ;

l'obtention d'une valeur de pression réelle du gaz de sortie du système à hydrogène monté sur véhicule, le calcul d'une différence entre la valeur de pression réelle et une valeur de pression cible, et l'obtention d'une erreur réelle ;

la comparaison de l'erreur de prédiction avec l'erreur réelle et, lorsque l'erreur de prédiction est inférieure à l'erreur réelle, l'utilisation du modèle de prédiction de la pression pour produire une valeur de pression prédite au moment suivant, et l'utilisation de la valeur de pression prédite en tant que pression cible au moment suivant afin de commander le gaz de sortie du système à hydrogène monté sur véhicule.

2. Procédé de commande d'un système à hydrogène monté sur véhicule selon la revendication 1, **caractérisé en ce que**, l'étape de l'élaboration du modèle de prédiction de la pression comprend :

la collecte, en continu, d'une valeur de pression réelle du gaz de sortie du système à hydrogène monté sur véhicule dans un temps donné, et l'élaboration d'une séquence de données d'origine selon la valeur de pression réelle dans le temps donné ;

l'élaboration d'un modèle de prédiction gris en tant que modèle de prédiction de la pression au moyen de la séquence de données d'origine.

3. Procédé de commande d'un système à hydrogène monté sur véhicule selon la revendication 2, **caractérisé en ce qu'**il comprend en outre les étapes suivantes :

l'élimination d'une première valeur de pression réelle dans la séquence de données d'origine, la mise à jour d'une nouvelle valeur de pression réelle collectée dans la séquence de données d'origine, et la réélaboration d'un modèle de prédiction gris sur la base d'une séquence de données d'origine mise à jour.

4. Procédé de commande d'un système à hydrogène monté sur véhicule selon la revendication 1, **caractérisé en ce que**, lorsque l'erreur de prédiction n'est pas inférieure à l'erreur réelle, la valeur de pression cible est utilisée en tant que pression cible au moment suivant, et le système à hydrogène monté sur véhicule est commandé pour produire du gaz.

5. Appareil de commande d'un système à hydrogène monté sur véhicule, comprenant une mémoire, un processeur et un programme informatique stocké dans la mémoire et exécuté sur le processeur, **caractérisé en ce que** le processeur met en oeuvre les étapes suivantes lors de l'exécution du programme :

l'élaboration d'un modèle de prédiction de la pression du gaz de sortie du système à hydrogène monté sur véhicule, et la détermination d'une valeur de pression prédite utilisée pour commander le gaz de sortie du système à hydrogène monté sur véhicule selon le modèle de prédiction de la pression ; le calcul d'une différence entre la valeur de pression prédite et une valeur de pression cible afin d'obtenir une erreur de prédiction ;

l'obtention d'une valeur de pression réelle du gaz de sortie du système à hydrogène monté sur véhicule, le calcul d'une différence entre la valeur de pression réelle et la valeur de pression cible, et l'obtention d'une erreur réelle ; la comparaison de l'erreur de prédiction avec l'erreur réelle, et lorsque l'erreur de prédiction est inférieure à l'erreur réelle, l'utilisation du modèle de prédiction de la pression pour produire une valeur de pression prédite au moment suivant, et l'utilisation de la valeur de pression prédite en tant que pression cible au moment suivant pour commander le système à hydrogène monté sur véhicule afin de produire du gaz.

6. Appareil de commande d'un système à hydrogène monté sur véhicule selon la revendication 5, **caractérisé en ce que** le processeur est en outre configuré pour mettre en oeuvre les étapes suivantes lors de l'exécution du programme :
la collecte, en continu, d'une valeur de pression réelle du gaz de sortie du système à hydrogène monté sur véhicule dans un temps donné, et l'élaboration d'une séquence de données d'origine selon la valeur de pression réelle dans le temps donné ; l'élaboration d'un modèle de prédiction gris en utilisant la séquence de données d'origine en tant que modèle de prédiction de la pression du gaz de sortie du système à hydrogène monté sur véhicule.

7. Appareil de commande d'un système à hydrogène monté sur véhicule selon la revendication 6, **caractérisé en ce que** le processeur est en outre configuré pour mettre en oeuvre les étapes suivantes lors de l'exécution du programme :
l'élimination d'une première valeur de pression réelle dans la séquence de données d'origine, la mise à jour d'une nouvelle valeur de pression réelle collectée dans la séquence de données d'origine, et la réélaboration d'un modèle de prédiction gris sur la base d'une séquence de données d'origine mise à jour.

8. Appareil de commande d'un système à hydrogène monté sur véhicule selon la revendication 5, **caractérisé en ce que** le processeur est en outre configuré pour mettre en oeuvre les étapes suivantes lors de l'exécution du programme :
lorsque l'erreur de prédiction n'est pas inférieure à l'erreur réelle, la valeur de pression cible est utilisée en tant que pression cible au moment suivant, et le système à hydrogène monté sur véhicule est commandé afin de produire du gaz.

9. Système à hydrogène monté sur véhicule, comprenant un réservoir de stockage d'hydrogène et un régulateur de pression, le régulateur de pression étant disposé sur un trajet de gaz sortant du réservoir de stockage d'hydrogène, **caractérisé en ce que** le système comprend en outre l'appareil de commande selon l'une quelconque des revendications 5 à 8, l'appareil de commande étant utilisé pour commander le régulateur de pression, de sorte que le régulateur de pression ajuste la pression du gaz de sortie à la pression cible.

10. Système à hydrogène monté sur véhicule selon la revendication 9, **caractérisé en ce qu'**il comprend en outre un capteur de pression pour collecter une valeur de pression réelle du gaz de sortie du système à hydrogène monté sur véhicule en temps réel, et envoyer les données collectées à l'appareil de commande.

Fig.1

Fig. 2

Fig. 3